# EUROPEAN PATENT APPLICATION

(11) **EP 1 898 349 A1**
(43) Date of publication of application: **12.03.2008**
(21) Application number: 06018652.5
(22) Date of filing: 06.09.2006
(51) Int. Cl.: G06Q 20/00, G07F 19/00

(54) **Method and system for providing a service to a subscriber of a mobile network operator**

(71) Applicant: SIEMENS AKTIENGESELLSCHAFT, 80333 München (DE)
(72) Inventor: Cuellar, Jorge, Dr., 82065 Baierbrunn (DE); Maidl, Monika, 81667 München (DE); Rajasekaran, Hariharan, 81675 München (DE); Shanmugam, Murugaraj, 81675 München (DE)

(57) **Abstract**

A method for providing a service to a subscriber of a mobile network operator comprising the following steps: requesting (S1) a service transaction by said subscriber (3) by means of a mobile device (4) at a service terminal (5) to receive a generated authentication challenge (C), calculating (S2) a response (R) by said mobile device (4) of said subscriber (3) depending on credentials issued by said mobile network operator (2) and the received authentication challenge (C), submitting (S3') the calculated response (R) to the service terminal (5), verifying (S4') the submitted response (R) by using the credentials issued by said mobile network operator (2) and the submitted authentication challenge (C), and performing (S5) the requested service transaction if the verification is successful.

## Description

The invention relates to a method and system for providing a service to a subscriber of a mobile network operator and, in particular, for providing a financial transaction service to a subscriber of a mobile network operator allowing the withdrawal of money from an automatic teller machine (ATM) by said subscriber by use of a mobile device.

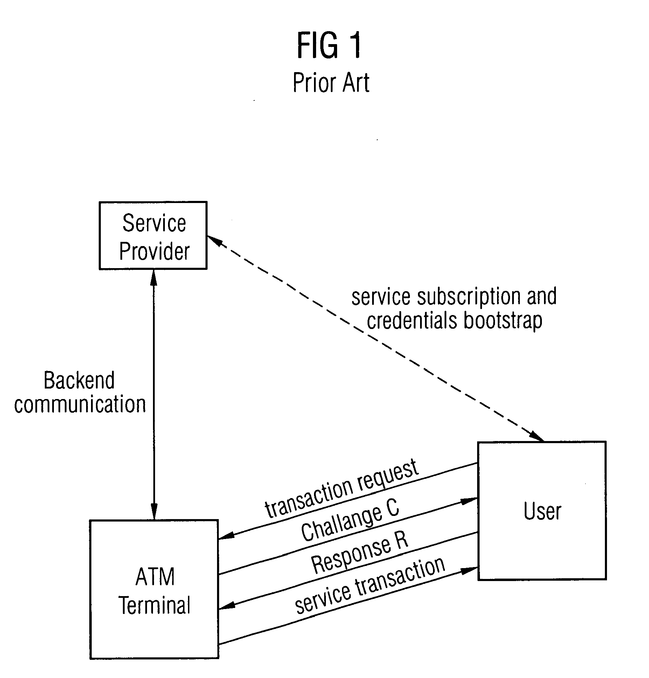

Many services are provided by service terminals, such as cash dispensers or terminals for selling tickets. Figure 1 shows a system for providing such a service to a user according to the state of the art. The user who wants to withdraw money from a cash dispenser, such as an ATM-terminal, has first to subscribe as a client to a service provider, such as a bank and opening a bank account with this service provider. When the bank has accepted the user as a client, it delivers credentials issued by the service provider to the user, such as password or a personal identification number (PIN). Along with the credentials, the user receives a credit card, such as an EC-card. To withdraw money from the cash dispenser, the user inserts the credit card into a slot of the cash dispenser as a request for a service transaction. The ATM-terminal generates a challenge C to the user by inquiring his personal identification number (PIN). The user enters his personal identification number as a response R which is normally forwarded by the ATM-terminal to a server of the service provider which performs a verification of the response R. After successful verification, the ATM-terminal is informed by the service provider that the transaction request of the user is valid and the requested service transaction is executed by the ATM-terminal. This way, the user receives the requested money from the cash dispenser ATM.

A conventional system for providing a service to the user as shown in figure 1 has several disadvantages. For service providers, such as a bank, it is necessary to issue, manage and replace debit or credit cards for a plurality of users. This is very time consuming and expensive for the service provider. Furthermore, the forwarding of the credit cards is performed normally via a mail service so that these credit cards can be intercepted by third persons creating a security problem.

A further disadvantage of the conventional system as shown in figure 1 resides in that the user for performing the requested service transactions has to carry the credit card with him. If the user holds several accounts with different service providers, he needs a credit card for each service provider, such as a bank. If the user wishes different services, such as buying a ticket from different service providers, such as a rail road operator or an air line, he needs a card for every service and he has to carry all these cards in his wallet. Furthermore, there is always the possibility that the user might loose one or all credit cards for the different services and has to get new credit cards.

A further disadvantage for the user is that he has to hold an account with each service provider, such as a bank. For receiving services from different service providers, the user might hold an account at each service provider which is difficult to manage for the user.

Accordingly, it is an object of the present invention to provide a method and a system of providing services to a user even when the user does not have an account with the service provider.

This object is achieved by a method having the features of claim 1.

The invention provides a method for providing a service to a subscriber of a mobile network operator comprising the following steps:
- requesting a service transaction by said subscriber by means of a mobile device at a service terminal to receive a generated authentication challenge C;
- calculating a response (R) by said subscriber depending on credentials issued by said mobile network operator and the received authentication challenge (C);
- submitting the calculated response (R) to the service terminal,
- verifying the submitted response (R) by the service provider, using the credentials issued by said mobile network operator and the authentication challenge (C); and
- performing the requested service transaction if the verification is successful.

An advantage of the method according to the present invention is that the subscriber does not have to carry the credit card with him to receive the requested service.

In one embodiment of the method according to the present invention, the requested service transaction is formed by a money withdrawal transaction from an ATM service terminal.

In one embodiment of the method according to the present invention, the subscriber before requesting said service transaction at the service terminal is authenticated by the mobile network operator when the subscriber requests to the offered service.

In one embodiment of the method according to the present invention, the mobile network operator after successful authentication of said subscriber generates at least two keys S, S', wherein the mobile network operator transmits a first key S along with a pointer t to said subscriber and wherein the mobile network operator transmits a second key S' to a service partner of said network operator.

This service partner is formed by a service provider.

In one embodiment of the method according to the present invention, the service partner is formed by a bank.

In one embodiment of the method according to the present invention, the response R is calculated by said subscriber depending on the first key S, the pointer t and the received authentication challenge C.

In one embodiment of the method according to the present invention, the response R calculated by the subscriber and submitted to the service terminal is verified using the second key S' and the authentication challenge C.

In one embodiment of the method according to the present invention, the response R calculated by the subscriber is calculated also depending on at least one input value Y.

In one embodiment of the method according to the present invention, the input value Y is input into the mobile device of said subscriber.

In one embodiment of the method according to the present invention, the input value Y is input into said service terminal.

In one embodiment of the method according to the present invention, the input value Y indicates an amount of money the subscriber wishes to withdraw from the service terminal.

In one embodiment of the method according to the present invention, the calculated response R is forwarded together with the authentication challenge C to the service partner who performs the verification.

In one embodiment of the method according to the present invention, the service partner calculates a proof P of the performed service depending on the forwarded response R and the second key S' when the service terminal reports a conclusion of the provided service.

In one embodiment of the method according to the present invention, the calculated proof P is transmitted from the service partner to the mobile network operator which verifies that the subscriber received the service at the service terminal on the basis of the received proof P.

In one embodiment of the method according to the present invention, the calculation of the proof P of the performed service depending on the forwarded response R and the second key S' is performed by the service terminal and the service terminal transmits the calculated proof P to the mobile network operator via said service partner.

In one embodiment of the method according to the present invention, the authentication challenge C is constructed by the service terminal by adding a time stamp to a random number preC received from a service partner of said mobile network operator.

In one embodiment of the method according to the present invention, the keys S, S' generated by the mobile network operator are asymmetric keys.

In an alternative embodiment of the method according to the present invention, the keys S, S' generated by said mobile network operator are symmetric keys.

In one embodiment of the method according to the present invention, the pointer p pointing to the second key S' is a HASH-value of the second key S'.

In one embodiment of the method according to the present invention, the calculated response R is verified by the service terminal.

In one embodiment of the method according to the present invention, the mobile network operator delivers the credentials to the subscriber when the subscriber subscribes to the provided service provided by the mobile network operator.

In an alternative embodiment of the method according to the present invention, the mobile network operator delivers the credentials to the subscriber every time when the subscriber requests a service transaction.

In another embodiment of the method according to the present invention, the mobile network operator delivers the credentials to said subscriber periodically.

In one embodiment of the method according to the present invention, the credentials issued by the mobile network operator comprise subscriber-bound credentials and mobile device-bound credentials.

In one embodiment of the method according to the present invention, the subscriber-bound credentials comprise a personal identification number and a password.

In one embodiment of the method according to the present invention, the mobile device-bound credentials comprise a device identification number and a certificate.

In one embodiment of the method according to the present invention, the response R is calculated by a trusted platform module TPM integrated in said mobile device of the subscriber.

In one embodiment of the method according to the present invention, the response R calculated by the trusted platform module TPM comprises the authentication challenge C, user identification, a certificate and a signature.

The invention further provides a system for providing a service to a subscriber of a mobile network operator comprising
at least one mobile device of said subscriber having a calculating unit for calculating a response R depending on credentials issued by said mobile network operator and an authentication challenge C, and
at least one service terminal which supplies the authentication challenge C to said mobile device when said service terminal receives a request for a service transaction from said subscriber and which performs a requested service transaction, if a verification of the calculated response R forwarded by said mobile device to said service terminal is successful.

The invention further provides a service terminal for providing a service to a subscriber of a mobile network operator which supplies an authentication challenge C to said mobile device of said subscriber upon reception of a request for a service transaction from said subscriber and which performs the requested service transaction, if a verification of a response R calculated depending on credentials issued by said mobile network operator and the supplied authentication challenge C is successful.

The invention further provides a mobile device of a subscriber of a mobile network operator comprising a calculating unit for calculating a response R depending on credentials issued by said mobile network operator and an authentication challenge C received via an interface from a service terminal upon request of a service transaction from the mobile device, wherein the calculated response is submitted via said interface to said service terminal for performing the requested service transaction after successful verification of the calculated response R.

In the following, preferred embodiments of the method and system for providing a service to a subscriber mobile network operator are described with reference to the enclosed figures.
Figure 1 shows a system for providing a service according to the state of the art;
Figure 2 shows a flowchart of a preferred embodiment of the method for providing a service to a subscriber of a mobile network operator according to the present invention;
Figure 3 shows a first embodiment of the system for providing a service to a subscriber of a mobile network operator according to the present invention;
Figure 4 shows a further embodiment of the system for providing a service to a subscriber of a mobile network operator according to the present invention;
Figure 5 shows a further embodiment of the system for providing a service to a subscriber of a mobile network operator according to the present invention.

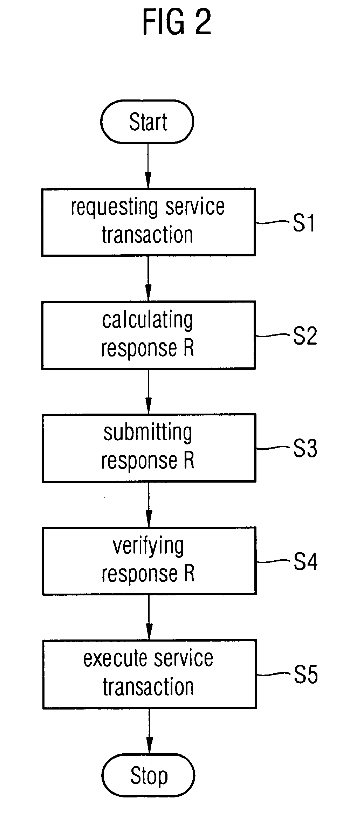

As can be seen from figure 2, a subscriber of a mobile network operator who wishes to execute a service transaction at a service terminal first requests the service transaction in a step S1 from the service terminal to receive a generated authentication challenge C.

In a step S2, a response R is calculated by the subscriber depending on credentials issued by a mobile network operator and the received authentication challenge C.

In as step S3, the calculated response R is submitted to the service terminal.

Further, in a step S4, the submitted response R is verified using the credentials issued by the mobile network operator and the authentication challenge C.

After successful verification of the response, the service transaction is performed in step S5.

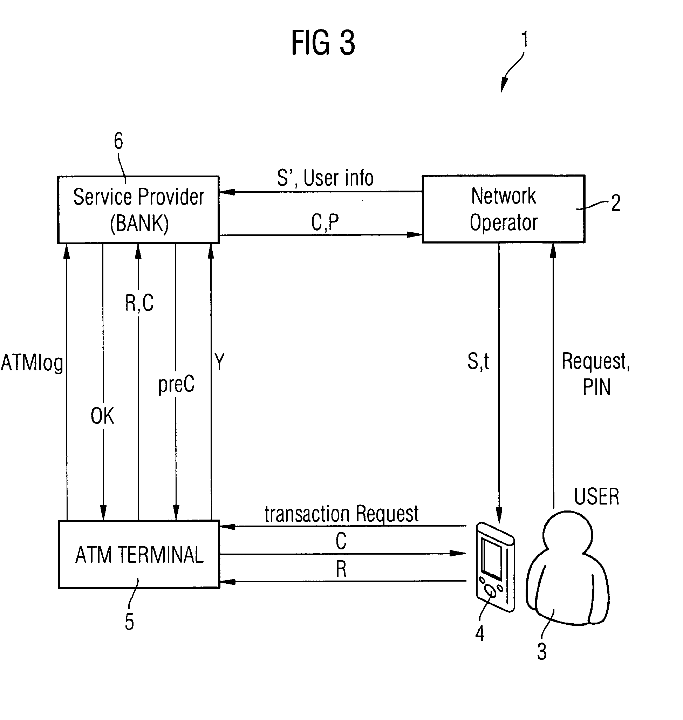

Figure 3 shows a first embodiment of a system 1 for providing a service to a subscriber mobile network operator according to the present invention. The system 1 is designed for providing a special service, such as a financial transaction service to a plurality of subscribers of a mobile network operator 2, such as Vodafone or Telekom in Germany. Each subscriber or user 3 has subscribed to the mobile network operator 2 and holds a mobile device 3, such as a mobile telephone, a smart phone, a PDA in his possession. The system comprises further at least one service terminal 5 for executing a service. In the given example of figure 3, the service terminal 5 is formed by a cash dispenser or ATM-terminal 5. The service terminal 5 is connected via a secure backend communication line to a service provider 6, such as a financial institute or bank. When the mobile network operator 2 wishes to offer a new service to his subscribers 3, he contracts a service level agreement SLA with the service provider 6 offering this service. In the given example, the mobile network operator, such as Vodafone, contracts a service level agreement SLA with at least one financial institute to offer an additional service to the subscribers 3 allowing the subscribers to withdraw cash from an ATM-terminal 5 without the need of having a bank account with the financial institute 6, and without the need of carrying a credit card with him. The service level agreement SLA between the service provider 6 and the mobile network operator 2 may or may not require an online connection between the service provider 6 and the mobile network operator 2. The backend communication between a server of the service provider 6 and the ATM-terminal 5 is formed by secure data transmission channel.

A user who wishes this additional service from his mobile network operator 2, will subscribe to this service in a service subscription process and get the corresponding credentials issued by the network operator 2 during a credential bootstrap procedure. The user 3 subscribed to the service holds certain credentials associated with the mobile network operator 2 that he can use later to withdraw money from a bank's ATM-terminal 5. In this way, these credentials issued and generated by the mobile network operator 2 may vary depending on a specific type of implementation. For example, the mobile network operator 2 delivers the credentials to the mobile device 4 of the user 3 once after subscription to this service or periodically every time the user 2 requests to perform the service transaction, e. g. to withdraw money from the ATM-terminal 5. Under these circumstances, it is necessary that there is an online connection between the network operator 2 and the mobile device 4. In an alternative embodiment, the mobile network operator 2 installs specific applications and credentials at the time of service subscription and the credentials are held by the mobile device 4 without a need of a communication between the mobile network operator 2 and the mobile device 4.

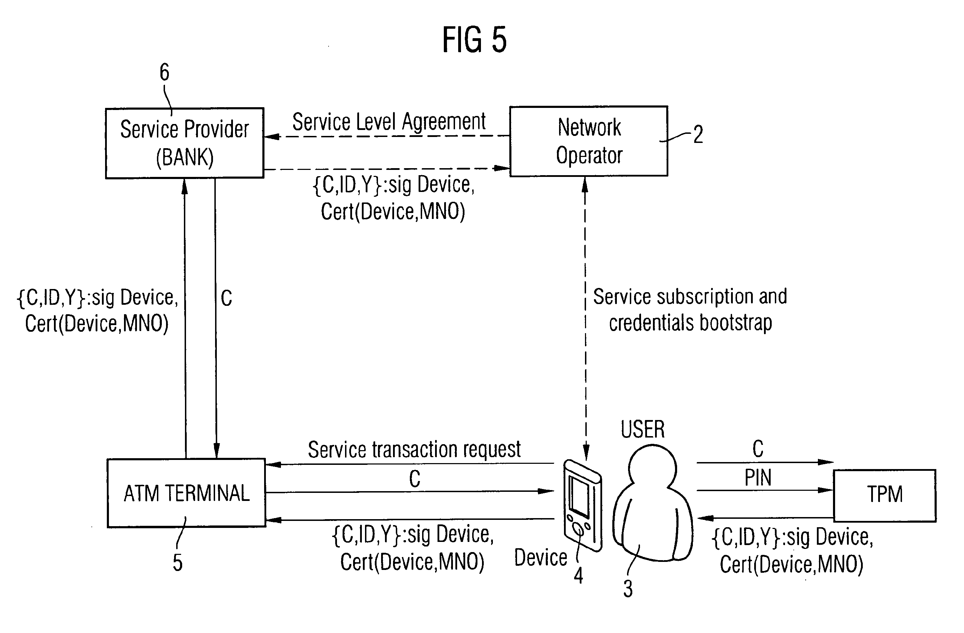

Figure 3 shows an embodiment of the system 1 according to the present invention, wherein there is an online connection between the mobile device 4 and the mobile network operator 2. In contrast, figure 5 shows an embodiment of the system 1 according to the present invention, wherein there is no need for an online connection between the mobile device 4 and the mobile network operator 2.

The credentials issued by the mobile network operator 2 can be bound to the user 3 or the mobile device 4. User-bound credentials are, for instance, a password or a personal identification number. Device-bound credentials are, for instance, a device identification number or a certificate of said device. If the credentials are tight to the device or terminal 4, a user interaction is necessary to ensure that only this user 3 is able to unlock the credentials in the mobile device 4. Binding credentials to the mobile device or terminal 4 ensures that such a credential can be built only by the specific device, thereby preventing spoofing attacks. Thus, this kind of tying the credentials to the user device 4 is aimed to replace credit/debit cards of a bank.

In the system 1 for providing a service to a subscriber of a mobile network operator 2, the mobile device 4 is used to securely store and handle credentials that are issued by the network operator 2 and which can be verified by a service partner 6 of the mobile network operator 2, such as a bank. The service provider 6 completes the service transaction based on the credentials issued by the network operator 2. Later, the service provider 6 is able to prove to the mobile network operator 2 about the transactions of the user 3 by submitting a proof P that the credentials were used to withdraw cash and by submitting associated verifiable transaction information.

Figure 3 shows an embodiment of the system 1 according to the present invention, wherein there is an online connection between a mobile device 4 of the user 3 and the mobile network operator 2 (online case). With this embodiment, the service provider bank 6 is able to check the credentials of the user 3 with the mobile network operator 2 in real time. The user 3 who wishes to withdraw from the ATM-terminal 5 has an account with the mobile network operator 2 and subscribes at the mobile network operator 2 for a special bank service. After the user 3 subscribes to this bank service of the mobile network operator 2, the user 3 and the mobile network operator establish a secret personal identification number (PIN) which is known to both parties. The mobile network operator 2 has a corresponding service level agreement SLA with at least one service provider 6, such as a bank. The service provider 6 has an ATM-terminal 5 for executing a service transaction, such as dispensing cash. There is a secure data communication channel between the bank 6 and the ATM-terminal. Furthermore, there is a secure data transmission channel between the bank 6 and the mobile network operator 2.

The user 3 requests the service to take money from the ATM-terminal 5 by dialling a special number or a URL. The mobile network operator 2 authenticates the user 3 and establishes a secure channel between the server and the mobile device 3. This can achieved through standard known protocols and techniques, such as 3GPP generic bootstrapping architecture or SSL-related techniques. Then, the user 3 is requested to authenticate him by entering his personal identification number PIN. In this way, a two-factor-authentication is obtained as a protection in case that the mobile device 4 has been stolen.

After successful authentication of the user 3, the mobile network operator 2 generates a pair of keys S, S' and a pointer t of one of those keys. The first key S is transmitted via the secure data channel to the mobile device 4 of the user 3. The data sent to the mobile device 4 can in addition be protected by other means, e. g. by additional encryption using symmetric or asymmetric keys which are either preinstalled or derived during the authentication phase, and which are specific to the user terminal 4. The first key S is sent along with a pointer t pointing to a second key S' to a mobile device 4. The other key S' is transmitted by the mobile network operator 2 to the service provider bank 6 along with user information like a credit limit. Again, the data can in addition be protected by other means, such as by preshared keys or keys derived during the authentication phase. Then, the user 3 goes to an authorized ATM-terminal 5 and requests a withdrawal service by issuing his identity and the pointer t via a near-field data communication, such as Bluetooth, IR, wherein the data transmission might be secured by standard methods. The user 3 specifies the requested amount Y of money he wants to withdraw from the ATM-terminal 5, either by typing the amount Y into the ATM-terminal 5 or into his mobile device 4. When the user 3 has typed in the amount Y into his mobile device 4, the value Y is transferred to the ATM-terminal 5. In the other case, when the user 3 has typed the amount Y into the ATM-terminal 5, the ATM-terminal 5 sends the value Y to the mobile device 4 so that the mobile device 4 can include this amount Y into the response R. After having received the request for withdrawal, the ATM-terminal 5 contacts the service provider 6 with the supplied request. The service provider 6 generates a new random number prec and sends this random number to the ATM-terminal 5. The function of the random number prec is to guarantee freshness of the response, i. e. to prevent replay attacks. The ATM-terminal 5 constructs an authentication challenge C by possibly adding data by a current time (data stamp) to the random number prec and sends the constructed authentication challenge C to the mobile device 4 of the user 3.

The mobile device 4 constructs a response R(C, S, t, Y) and sends it back to the ATM-terminal 5 which forwards the response R together with the authentication challenge C to the service provider 6, wherein a verification verify (X, C, S', t, Y) is performed. If the verification is successful, the service provider 6 is convinced that the user 3 connected to the key S' has sent the transaction request. In this case, and if other conditions like credit limits are fulfilled, the service provider 6 authorizes the ATM-terminal 5 to dispense the amount Y to the user 3. The ATM-terminal 5 executes the requested transaction service and indicates to the service provider 6 that the service transaction has been concluded with ATMlog.

In a further step, the service provider 6 constructs a proof P(R, S', ATMLOG) and sends the proof P to the mobile network operator 2 via a secure data transmission channel. With the received information, the mobile network operator 2 can verify by performing a verification, i. e. verify proof (X, S, S', C, Y, ATMLOG), that the user 3 connected to the key pair S, S' indeed made a transaction request for the amount Y from the service provider 6 and has obtained the requested money. The transaction report ATMlog is stored in the ATM-terminal 5 in case that later conflicts between service providers 6 and the network operator 2 occur. Finally, the user 3 is charged by his mobile phone bill for the executed service transaction.

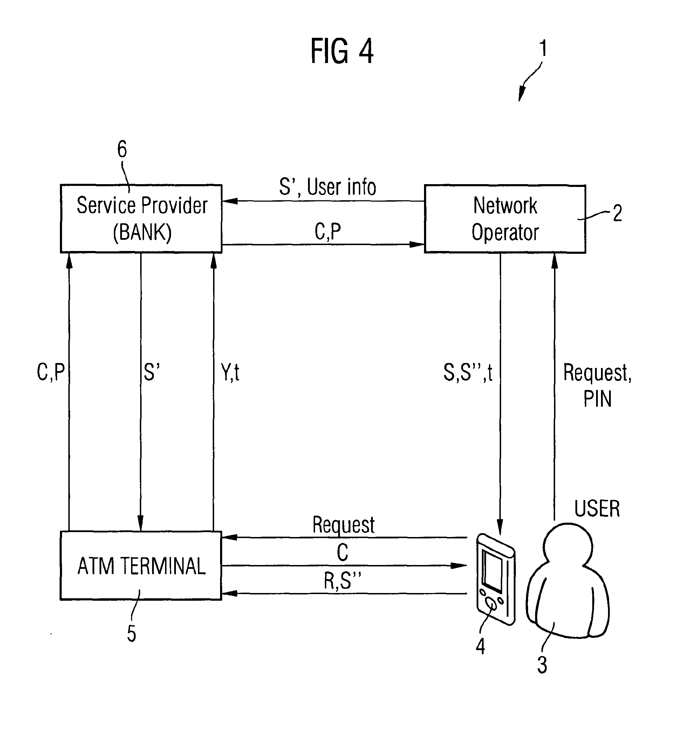

Figure 4 shows an alternative embodiment of the system 1 for providing a service to a subscriber of a mobile network operator 2. In this embodiment, the verification of the user response R is performed by the ATM-terminal 5. If the verification is successful, the ATM-terminal 5 delivers the money and generates a proof P which is sent by the ATM-terminal 5 to the mobile network operator 2 via the service provider 6. This way, it is guaranteed that the ATM-terminal 5 which issued the money makes the statement about the transaction, and the service provider 6 can not modify the report ATMLOG in retrospective.

In the embodiment as shown in figure 4, additional data is required. In the embodiment of figure 4, the mobile network operator 2 generates three secret keys S, S', S'', wherein the first key S and the second key S' are used in the same manner as in the embodiment as shown in figure 3. The third key S" is sent by network operator 2 to the ATM-terminal 5 via the mobile device 4 of the user 3. The service provider 6 does not know the third key S" so that it can be used to authenticate the ATM-terminal 5 to the mobile network operator 2.

For the calculation of the proof P, the third key S" is used, i. e. the proof is calculated as P(R, S", Y, ATMLOG). Accordingly, the third key S" is necessary to check the transmitted proof, i. e. verify proof (X, S, S', S'', C, Y, ATMLOG), wherein the third key S" forms an extra-argument of the verification function. It is required that the service provider 6 cannot generate P, but is not required that the service provider 6 can check the proof P.

In the embodiment of figure 4, the user 3 who wishes to withdraw money from the ATM-terminal 5 goes to the authorized ATM-terminal 5 and requests a withdrawal service by issuing his identity as shown in the embodiment of figure 3 ,and specifies the requested amount Y of money he likes to withdraw by typing the amount Y into the ATM-terminal 5 or into his mobile device 4. The ATM-terminal 5 contacts the service provider 6 with the supplied request, or more precisely, with the user identity in form of the pointer t and the requested amount Y. The service provider 6 can match the pointer t with the key S' and check whether the withdrawal is permitted, i. e. whether the credit limit is observed as specified in the user info data received from the network operator 2. If the check is positive, the service provider 6 sends the key S' to the ATM-terminal 5 which uses the received key S' to check the response R received from the mobile device 4. Then, the ATM-terminal 5 generates an authorization challenge C and sends it to the mobile device 4 of the user 3.

The mobile device 4 constructs the response R(C, S, t, Y) and sends the response R to the ATM-terminal 5 where the verification verify (x, C, S', t, Y) is performed. If the verification is successful, the ATM-terminal 5 is convinced that the user 3 connected to the secret key S' has sent the transaction request. In this case, the amount Y is issued to the user. The ATM-terminal 5 constructs the proof P(R, S'', Y, ATMLOG) and sends it back to the service provider 6.

As the data transmission channel between the service provider 6 and the ATM-terminal is secure, the service provider 6 is convinced that the proof P has been generated by the ATM-terminal 5 and has not been modified. The service provider 6 forwards the proof P to the mobile network operator 2 via a further secure data transmission channel. With this information, the mobile network operator 2 can verify the proof by performing a verify proof (X, S, S', S", C, Y, ATMLOG) that the user 3 connected to the three keys S, S', S" has made the transaction request for an amount Y from the service provider 6 and has received the requested money. As only the ATM-terminal 5 but not the service provider 6 can construct the proof P, the ATM-terminal 5 cannot forge the response. In addition, the report ATMLOG is stored securely in the ATM-terminal 5 and the mobile network operator 2 can be sure that the transactions happened as specified. Finally, the user 3 is charged for the service transaction on his mobile phone bill.

Figures 3 and 4 shows both embodiments where there is an online connection to the service provider 6. In the embodiment of figure 3, the verification is performed by the service provider 6 and in the embodiment of figure 4, the verification is performed by the ATM-terminal 5.

In the embodiment of figure 3, the created pair of keys S, S' are either formed by asymmetric keys or symmetric keys. The pointer t to the second key S' can be a HASH-value. The authentication challenge C is formed in one embodiment by appending data to the generated random number prec. In one embodiment, the response R is calculated by encrypting the authentication challenge C and an input value Y with the asymmetric key S(C, S, t, Y) = {C, Y}_{S}. The first key S and the second key S' of the generated pair of keys are not derivable from each other but it possible to obtain the second key S' from the HASH-value HASH(S'). Accordingly, the service provider 6 cannot obtain the first key S and the user 3 cannot obtain the second key S'. The verification will be performed by the encryption of {C, Y} with the second key S'. The verification of the proof is performed by a verified proof (X, S, S', C, Y, ATMLOG) by checking that X = Z, S', ATMLOG and decrypting Z by the second key S', thereby checking that Z = {C, Y}s.

Another possibility is to choose the first and the second key S, S' as nonces (new random number) and prec a new symmetric key, wherein the pointer t is = HASH(S') and R(C, S, t, Y) = {Y, C, HASH (Y, C, S), t} prec and proof P(R, S', ATMLOG )= R, S', ATMLOG. In this embodiment, the second key S' cannot be obtained from the pointer HASH (S'), furthermore the first key S cannot be obtained from HASH (S). A verification verify (X, C, S', t) is performed by decryption of X with prec and checking that C, Y have the expected values and that the pointer t points to the second key S'. Furthermore, the user 3 can obtain the pointer t only from the mobile network operator 2. Since the HASH-value HASH(S, Y, C) contains the first key S, it cannot be forged by the service provider 6. In this embodiment, the service provider 6 can check whether the response R(C, S, t, Y) is of the form {Y, C, H, t} prec for some H, but it cannot check that H = HASH(Y, C, S) since it does not know the first key S. Moreover, the service provider 6 can replace R(C, S, t, Y) by {Y', C, HASH (Y, C, S), t} prec and the mobile network operator 2 can detect the inconsistency but not find out whether the service provider 6 or the user 3 has cheated. Hence, the service provider 6 and the mobile network operator 2 have to agree on how to act in case that the mobile network operator 2 detects inconsistencies in a response R. This problem can be avoided by using asymmetric cryptography as described above, where symmetric keys are also used.

In a possible implementation of the embodiment as shown in figure 4, the keys S, S' can be formed by a pair of asymmetric keys. The additional the third key S" can be chosen as a new symmetric key and the pointer t to the second key S' can be formed by a HASH-value t = HASH(S'). The authentication challenge C can be formed by a random number with possibly added data. The response R(C, S, t, Y) is {C, Y}s, i. e. the encryption of the authentication challenge C and the amount Y with the asymmetric key S. The proof P(R, S", Y, ATMLOG) is {R, Y, ATMLOG}_{S"}. As the service provider 6 does not know the third key S", it is not possible for the bank 6 to generate the proof P. The verification verify proof (X, S, S', S'', C, Y, ATMLOG) is formed by a encryption of X with the third key S" and checking that X = Z, Y, ATMLOG and decrypting Z by the second key S', thereby checking that Z = {C, Y}s.

The instantiation with symmetric cryptography can be adapted for the embodiment of figure 4 as well. The keys S, S' are formed by random numbers and the third key S" is formed by a new symmetric key. The response R(C, S, t, Y) = {Y, C, HASH (Y, C, S), t}C, the proof P(R, S'', Y, ATMLOG) = {R, Y, ATMLOG}S''. The verification verify (X, C, S', t, Y) is formed by the decryption of the value X with the authentication challenge C and checking whether the authentication challenge C and the value Y have the expected values and that the pointer t points to the second key S'.

Figure 5 shows a further embodiment of the system 1 for providing a service to a subscriber 3 of a mobile network operator 2 according to the present invention. In this embodiment, the trusted platform module TPM is integrated in the mobile device 4 of the subscriber 3. If the user 3 is interested in the money service offered by the mobile network operator 2, he can request the mobile network operator 2 to issue the appropriate credentials which are stored securely within the trusted platform module TPM of his mobile device 4. The credentials carry authentication information and service related information, such as the maximum amount of money, the user 3 can withdraw or a time period within the subscriber 3 can use the credentials. Whenever the subscriber 3 likes to use the service, he launches a money application in his mobile device 4. Then, the subscriber 3 contacts the ATM-terminal 5 which sends back the authentication challenge C. The task of the trusted platform module TPM is to construct a response R by using the received the authentication challenge C and the stored credentials. The trusted platform module TPM sends the calculated response R after the user 3 has been authenticated with his personal authentication number PIN. After obtaining the response R which proves the identity of the user 3, the service provider 6 can execute the transaction and can prove later to the mobile network operator 2 that the particular user 3 has received a requested service transaction. Finally, the user 3 is charged on his mobile phone bill for the service transactions.

For performing a service transaction in the system 1 of figure 5, the following steps are performed.

First, the user terminal 4 requests a money withdrawal as a service transaction from the ATM-terminal 5. As a response, the service provider 6 issues a random number C and forwards it to the ATM-terminal 5. The ATM-terminal 5 forwards the random number as an authentication challenge C to the mobile device 4. The mobile device 4 applies the authentication challenge C to the integrated trusted platform module TPM. The TPM-module of the mobile device 4 asks the subscriber 3 to enter his personal identification number PIN. After reception of the PIN number, the TPM verifies a validity of the PIN. If the verification is successful, it provides a response for executing the service transaction. In one embodiment, the response {C, ID, Y}; sig Device, cert (device, MNO) contains the authentication challenge C issued by the service provider 6 which proves the freshness of the response, and an identity of the user, such as a MSISDN, a phone number, a pseudonym etc. When the identity is used to link the service transactions with the account of the subscriber 3 at the mobile network operator 2. Further, the response contains a requested amount Y or other relevant information needed for completing the service transaction, such as a time stamp, a maximum withdrawal limit etc. The response contains also a certificate (device, MNO) issued by the mobile network operator 2 which includes a public key (PUB device) of the mobile device 4 and proves that this is the public key of the device as registered with the mobile network operator 2. The credential is signed by the device-specific key (SIG device) that is stored in the trusted platform module TPM of the mobile device 4.

As shown in figure 5, the mobile device 4 submits the response to the ATM-terminal 5, for example, via a near-field communication interface, e. g. IR, Bluetooth, which might be secured by standard methods. The ATM-terminal 5 forwards the response to the service provider 6 via a secured data transmission channel. The service provider 6 validates the request by validating the credential by checking a signature revocation lists and so on. Furthermore, the service provider 6 looks at the user identity and in a possible embodiment at the user history. For example, a counter is implemented which indicates whether the user 3 has had previous authentication failures or whether he is on a black list.

After a successful verification, the service provider 6 issues a permission to ATM-terminal 5 to fulfil the requested service transaction. Otherwise, the process is aborted.

Later, the service provider 6 sends {C, ID, Y}: a sig Device, a certificate Device, MNO to the mobile network operator 2 in order to prove that the user 3 made a transaction request for the amount Y from the service provider 6. Finally, the user 3 is charged on his mobile phone bill for the service transaction.

In a possible embodiment, the communication between the ATM-terminal 5 and the service provider 6 can be avoided if a infrastructure is provided to verify the supplied credentials from the ATM-terminal 5 itself.

The content of credentials issued by the mobile network operator 2 can vary according to the requirements of the service provider 6. The format is a matter of a service level agreement SLA between the mobile network operator 2 and the service provider 6. The format can be a certificate, SAML tokens, tokens written using Rights Expression Languages or similar.

The embodiments showing a system 1 according to the present invention as shown in figures 3, 4 and 5 are only exemplary and are, in particular, not restricted to an ATM-terminal. The terminal 5 can also be a terminal for dispensing tickets or any goods to the user 3. Further, the service provider 6 does not have to be a financial institute, such as a bank, but can be a provider of any useful service, such as a transportation service or the like. The mobile device 4 can be any mobile device, not necessarily a mobile phone.

In the system according to the present invention, the service provider 6 does not have to issue, manage and to replace credit cards. The system according to the present invention does not require any new terminal infrastructure, but can be realized on existing terminals 5 that can be updated to the new functionality. In the case of an ATM-terminal, the ATM-terminal has only to be connected securely to the service provider 6. The authentication infrastructure at the provider's end needs a minimal upgrading to validate credentials issued by the mobile network operator 2.

With the system according to the present invention, it is possible that a mobile network operator 2 in fact becomes a financial service provider allowing the user 3 to withdraw money from a terminal 5 without the need of having a credit card with him, or simply by using his mobile phone 4. The invention provides a possibility for a secure cash withdrawal from ATM-terminals 5 using a mobile device 4 via a mobile network operator 2.

## Claims

1. A method for providing a service to a subscriber of a mobile network operator comprising the following steps:
(a) Requesting (S1) a service transaction by said subscriber (3) by means of a mobile device (4) at a service terminal (5) to receive a generated authentication challenge (C);
(b) Calculating (S2) a response (R) by said mobile device (4) of said subscriber (3) depending on credentials issued by said mobile network operator (2) and the received authentication challenge (C);
(c) Submitting (S3) the calculated response (R) to the service terminal (5);
(d) Verifying (S4) the submitted response (R) by using the credentials issued by said mobile network operator (2) and the submitted authentication challenge (C); and
(e) Performing (S5) the requested service transaction if the verification is successful.

2. The method according to claim 1,
wherein the requested service transaction is formed by a money withdrawal transaction from a automatic teller machine (5).

3. The method according to claim 1,
wherein the subscriber (3) before requesting said service transaction at a service terminal (5) is authenticated by said mobile network operator (2) when the subscriber (3) subscribes to the offered service.

4. The method according to claim 3,
wherein the mobile network operator (2) after successful authentication of said subscriber (3) generates two keys (S, S') wherein the mobile network operator (2) transmits a first key (S) along with a pointer (t) pointing to a second key (S') to the mobile device (4) of said subscriber (3) and wherein the mobile network operator (2) transmits the second key (S') to a service partner (6) of said mobile network operator (2).

5. The method according to claim 4,
wherein said service partner (6) is formed by a service provider.

6. The method according to claim 5,
wherein said service provider (6) is formed by a bank.

7. The method according to claim 4,
wherein the response (R) is calculated by the mobile device (4) of said subscriber (3) depending on the first key (S), the pointer (t) and the received authentication challenge (C).

8. The method according to claim 7,
wherein the response (R) calculated by said mobile device (4) of said subscriber (3) and submitted to the service terminal (5) is verified using the second key (S') and the authentication challenge (C).

9. The method according to claim 7,
wherein the response (R) calculated by the mobile device (4) of said subscriber (3) is calculated also depending on at least one input value (Y).

10. The method according to claim 1,
wherein the input value (Y) is input into the mobile device (4) of said subscriber (3).

11. The method according to claim 9,
wherein the input value (Y) is input into said service terminal (5).

12. The method according to claim 9,
wherein the input value (Y) indicates an amount of money which the subscriber (3) wishes to withdraw from the service terminal (5).

13. The method according to claim 4,
wherein the calculated response (R) is forwarded together with the authentication challenge (C) to the service partner (6) which performs a verification of the calculated response (R).

14. The method according to claim 13,
wherein the service partner (6) calculates a proof (P) of the performed service depending on the forwarded response (R) and the second key (S') when the service terminal (5) reports the conclusion of the provided service.

15. The method according to claim 14,
wherein the calculated proof (P) is transmitted from the service partner (6) to the mobile network operator (2) which verifies that the subscriber (3) received the service at the service terminal (5) on the basis of the received proof (P).

16. The method according to claim 13,
wherein the calculation of a proof (P) of the performed service is depending on the forwarded response (R), and the second key (S') is performed by the service terminal (5) and the service terminal (5) transmits the proof (P) to the mobile network operator (2) via said service partner (6).

17. The method according to claim 1,
wherein the authentication challenge (C) is constructed by the service terminal (5) by adding a time stamp to a random number (prec) received from a service partner (6) of said mobile network operator (2).

18. The method according to claim 4,
wherein the keys (S, S') generated by said mobile network operator (2) are asymmetric keys.

19. The method according to claim 4,
wherein the keys (S, S') generated by said mobile network operator (2) are symmetric keys.

20. The method according to claim 4,
wherein the pointer (t) pointed to the second key (S') is a HASH-value of the second key (S').

21. The method according to claim 1,
wherein the calculated response (R) is verified by the service terminal (5).

22. The method according to claim 1,
wherein the mobile network operator (2) delivers the credentials to the subscriber (3) when the subscriber (3) subscribes to the provided service.

23. The method according to claim 1,
wherein the mobile network operator (2) delivers the credentials to the subscriber (3) every time, when the subscriber (3) requests a service transaction.

24. The method according to claim 1,
wherein the mobile network operator (2) delivers the credentials periodically to the subscriber (3).

25. The method according to claim 1,
wherein the credentials issued by said mobile network operator (2) comprise subscriber-bound credentials and mobile device-bound credentials.

26. The method according to claim 25,
wherein the subscriber-bound credentials comprise a personal identification number (PIN) and/or a password.

27. The method according to claim 25,
wherein the mobile device-bound credentials comprise a device authentication number and a certificate.

28. The method according to claim 1,
wherein the response (R) is calculated by a trusted platform module (TPM) integrated in said mobile device (4) of said subscriber (3).

29. The method according to claim 28,
wherein the response (R) calculated by said trusted platform module (TPM) contains an authentication challenge (C), the identity of the subscriber (3), a device certificate issued by the mobile network operator (2) and credentials designed by a device specific key.

30. A system for providing a service to a subscriber (3) of a mobile network operator (2) comprising:
(a) at least one mobile device (4) of said subscriber (3) having a calculating unit for calculating a response (R) depending on credentials issued by said mobile network operator (2) and an authentication challenge (C);
(b) at least one service terminal (5) which supplies the authentication challenge (C) to said mobile device (4) when said service terminal (5) receives a request for a service transaction from said subscriber (3) and which performs the requested service transaction, if a verification of the calculated response (R) forwarded by said mobile device (4) to said service terminal (5) is successful.

31. A service terminal (5) for providing a service to a subscriber (3) of a mobile network operator (2),
wherein the service terminal (5) supplies an authentication challenge (C) to a mobile device (4) of said subscriber (3) upon reception of a request for service transaction from said subscriber (3) and which performs the requested service transaction if a verification of the response (R) calculated depending on credentials issued by said mobile network operator (2) and the supplied authentication challenge (C) is successful.

32. A mobile device (4) of a subscriber (3) of a mobile network operator (2) comprising a calculating unit for calculating a response (R) depending on credentials issued by said network operator (2) and an authentication challenge (C) received via an interface from a service terminal (5) upon request of a service transaction requested from the mobile device (4),
wherein the calculated response (R) is submitted via said interface to said service terminal (5) for performing the requested service transaction after a successful verification of the calculated response (R).
